# EUROPEAN PATENT SPECIFICATION

(11) **EP 3 335 904 B1**
(45) Date of publication and mention of the grant of the patent: **11.03.2020**
(21) Application number: 17205769.7
(22) Date of filing: 06.12.2017
(51) Int. Cl.: B60C 1/00, C08L 15/00

(54) **PNEUMATIC TIRE**
LUFTREIFEN
PNEUMATIQUE

(30) Priority: 06.12.2016 US 201615369987
(43) Date of publication of application: 20.06.2018
(73) Proprietor: The Goodyear Tire & Rubber Company, Akron, OH 44316 (US)
(72) Inventor: ISITMAN, Nihat Ali, Hudson, OH Ohio 44236 (US); STEINER, Pascal Patrick, L-9189 Vichten (LU); CHAIDRON, Marie Charlotte, B-6717 Metzert (BE); THIELEN, Georges Marcel Victor, L-4995 Schouweiler (LU)
(74) Representative: Kutsch, Bernd

(56) References cited:
- EP-A1- 2 412 544
- EP-A1- 3 031 620
- EP-A1- 3 031 621

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

Tires are sometimes desired with treads for promoting traction on snowy surfaces. Various rubber compositions may be proposed for tire treads. Here, the challenge is to reduce the cured stiffness of such tread rubber compositions, as indicated by having a lower storage modulus G' at -20°C, when the tread is intended to be used for low temperature winter conditions, particularly for vehicular snow driving.

It is considered that significant challenges are presented for providing such tire tread rubber compositions for maintaining both their wet traction while promoting low temperature (e.g. winter) performance.

EP-A-3 031 621 describes a pneumatic tire having good tread wear, wet traction and low temperature with viscoelastic properties which is particularly suitable for use as a tread compound in a winter tire. The rubber composition comprises a solution polymerized styrene-butadiene rubber functionalized with an alkoxysilane group and at least one functional group selected from the group consisting of primary amines and thiols. Furthermore, the rubber composition comprises cis-polybutadiene, silica and a combination of a resin and an oil. The weight ratio of resin to oil is greater than 1.

### Summary of the Invention

The invention relates to a tire in accordance with claim 1.

Dependent claims refer to preferred embodiments of the invention.

In a preferred aspect of the invention, it is directed to a pneumatic tire having a tread comprising a tread base layer and an outer cap layer disposed radially outward of the base layer, the outer cap layer comprising an axially central zone and two lateral zones each disposed axially adjacent to the central zone; the central zone comprising a central zone composition and lateral zones each comprising a lateral zone composition; the central zone composition and the lateral zone composition each comprising, based on 100 parts by weight of elastomer (phr): from 50 to 90 phr of a solution polymerized styrene-butadiene rubber having a glass transition temperature (Tg) ranging from -65°C to -55°C and functionalized with an alkoxysilane group and at least one functional group selected from the group consisting of primary amines and thiols; from 50 to 10 phr of polybutadiene having a cis 1,4-content greater than 90 percent, preferably greater than 95 percent, and a Tg ranging from -80 to -110 °C; from 100 to 180 phr of silica, preferably precipitated silica; and from 30 to 80 phr of a combination of a resin having a Tg of at least 30 °C and an oil wherein the weight ratio of the amount of silica to the total amount of resin and oil is less than 3; wherein the weight ratio of resin to oil in one of the central zone composition and lateral zone composition is greater than 2, and the weight ratio of resin to oil in the other of the central zone composition and lateral zone composition is less than 2.

In one preferred aspect of the invention, the first lateral zone rubber composition is different from the second lateral zone rubber composition.

In another preferred aspect of the invention, the central zone rubber composition is the same as the first lateral zone rubber composition or as the second lateral zone rubber composition.

In yet another preferred aspect of the invention, the first lateral zone rubber composition and the second lateral zone rubber composition are the same, and, accordingly, the central zone rubber composition is different from the first and the second lateral zone rubber composition.

In a preferred aspect of the invention, the tread cap layer is the radially outermost tread cap layer of the tread and configured to fully or at least partially come into contact with the road when the tire is used.

### Brief Description of the Drawings

Figure 1 shows a first embodiment of a tread in cross section.
Figure 2 shows a second embodiment of a tread in cross section.

### Description of the Example Embodiments of the Invention

There is disclosed a pneumatic tire having a tread comprising a tread base layer and an outer cap layer disposed radially outward of the base layer, the outer cap layer comprising an axially central zone and two lateral zones each disposed axially adjacent to the central zone; the central zone comprising a central zone composition and lateral zones each comprising a lateral zone composition; the central zone composition and the lateral zone composition each comprising, based on 100 parts by weight of elastomer (phr), from 50 to 90 phr of a solution polymerized styrene-butadiene rubber having a glass transition temperature (Tg) ranging from -65 °C to -55 °C and functionalized with an alkoxysilane group and at least one functional group selected from the group consisting of primary amines and thiols; from 50 to 10 phr of polybutadiene having a cis 1,4 content greater than 95 percent and a Tg ranging from -80 to -110 °C; from 100 to 180 phr of precipitated silica; and from 30 to 80 phr of a combination of a resin having a Tg of at least 30 °C and an oil wherein the weight ratio of the amount of silica to the total amount of resin and oil is less than 3; wherein the weight ratio of resin to oil in one of the central zone composition and lateral zone composition is greater than 2, and the weight ratio of resin to oil in the other of the central zone composition and lateral zone composition is less than 2.

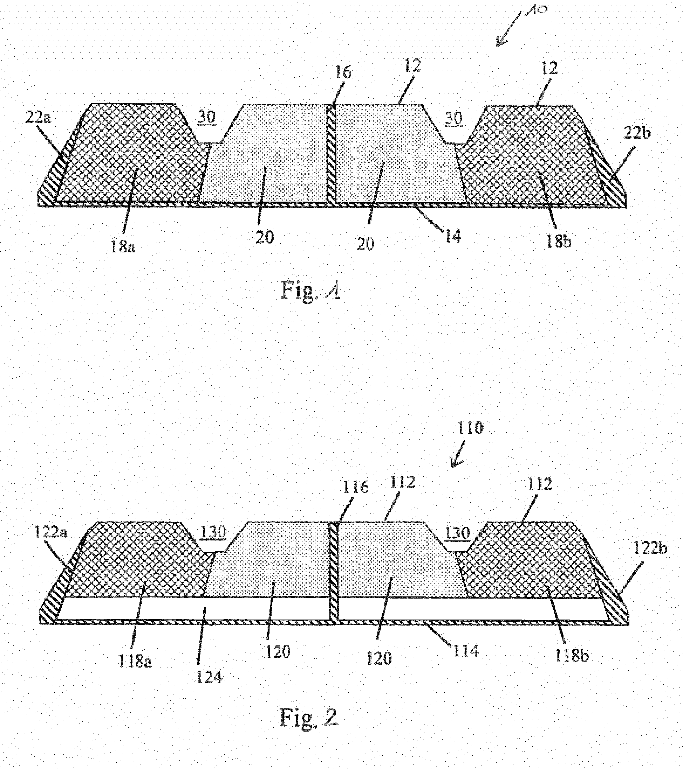

With reference now to Figure 1, tread 10 is shown in cross-section. Tread 10 includes outer cap layer 12 disposed radially outward of base layer 14. Outer cap layer 12 includes central zone 20 disposed axially central on the tread 10, and two lateral zones 18a, 18b disposed axially adjacent to and on either side of central zone 20 with circumferential grooves 30 disposed between central zone 20 and each of the lateral zones 18a, 18b. In the embodiment shown in Figure 1, outer cap layer 12 extends radially outward from and contacts the base layer 14. A pair of tread wings 22a, 22b extend radially outward from base 14. Wing 22a is disposed axially adjacent to lateral zone 18a and axially distal from central zone 20. Likewise, wing 22b is disposed axially adjacent to lateral zone 18b and axially distal from central zone 20. An optional conductivity chimney 16 extends radially outward from base 14 through outer cap layer 12. Chimney 16 provides a conductive path to conduct static electricity from a tire (not shown) comprising the tread 10. The base 14, chimney 16 and wings 22a, 22b are preferably made of the same rubber composition that typically includes sufficient carbon black to provide a conductive path. Central zone 20 is made from a central zone rubber composition, and lateral zones 18a, 18b are made of a first and second lateral zone rubber composition, respectively. The first and second lateral zone rubber composition are preferably the same, but they can also be different.

With reference to Figure 2, a second embodiment of the tread 110 is shown wherein an inner cap layer 124 is disposed radially between outer cap layer 112 and base layer 114. Outer cap layer 112 includes central zone 120 disposed axially central on the tread 110, and two lateral zones 118a, 118b disposed axially adjacent to and on either side of central zone 120 with circumferential grooves 130 disposed between central zone 120 and each of the lateral zones 118a, 118b. In the embodiment shown in Figure 2, outer cap layer 112 extends radially outward from and contacts the inner cap layer 124. A pair of tread wings 122a, 122b extend radially outward from base 114. Wing 122a is disposed axially adjacent to lateral zone 118a and axially distal from central zone 120. Likewise, wing 122b is disposed axially adjacent to lateral zone 118b and axially distal from central zone 120. An optional conductivity chimney 116 extends radially outward from base 114 through inner cap layer 124 and outer cap layer 112. Chimney 116 provides a conductive path to conduct static electricity from a tire (not shown) comprising the tread 110. The base 114, chimney 116 and wings 122a, 122b are preferably made of the same rubber composition that typically includes sufficient carbon black to provide a conductive path. Central zone 120 is made from a central zone rubber composition, and lateral zones 118a, 118b are made of a first and second lateral zone rubber composition, respectively. The first and second lateral zone rubber composition are preferably the same, but they can also be different. Inner cap layer 124 is made from an inner tread cap rubber composition being different from the first and second lateral zone rubber composition.

The rubber compositions of the outer cap layer, including both the central zone composition and lateral zone composition, and the inner cap layer include from 50 to 90 phr of a styrene-butadiene rubber functionalized with an alkoxysilane group and at least one of a primary amine group and thiol group. In one embodiment, the styrene-butadiene rubber is obtained by copolymerizing styrene and butadiene, and characterized in that the styrene-butadiene rubber has a primary amino group and/or thiol group and an alkoxysilyl group which are bonded to the polymer chain. In one embodiment, the alkoxysilyl group is an ethoxysilyl group.

The primary amino group and/or thiol group may be bonded to any of a polymerization initiating terminal, a polymerization terminating terminal, a main chain of the styrene-butadiene rubber and a side chain, as long as it is bonded to the styrene-butadiene rubber chain. However, the primary amino group and/or thiol group is preferably introduced to the polymerization initiating terminal or the polymerization terminating terminal, in that the disappearance of energy at a polymer terminal is inhibited to improve hysteresis loss characteristics.

Further, the content of the alkoxysilyl group bonded to the polymer chain of the (co)polymer rubber is preferably from 0.5 to 200 mmol/kg of (styrene-butadiene rubber. The content is more preferably from 1 to 100 mmol/kg of styrene-butadiene rubber, and particularly preferably from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. However, the alkoxysilyl group is preferably introduced to the polymerization initiating terminal or the polymerization terminating terminal, in that the disappearance of energy is inhibited from the (co)polymer terminal to be able to improve hysteresis loss characteristics.

The styrene-butadiene rubber can be produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure. In one embodiment, the styrene-butadiene rubber can be produced as disclosed in US-B-7,342,070. In another embodiment, the styrene-butadiene rubber can be produced as disclosed in WO-A-2007/047943.

In one embodiment, and as taught in US-B- 7,342,070, the styrene-butadiene rubber is of the formula (I) or (II) 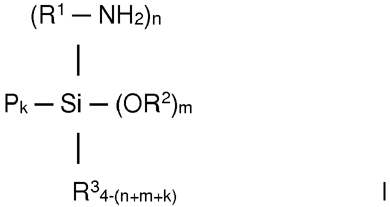 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 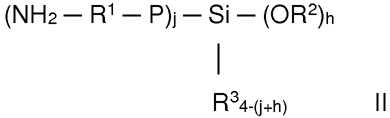 wherein P, R¹, R² and R³ have the same definitions as give for the above-mentioned formula I, j is an integer of 1 to 3, and h is an integer of 1 to 3, with the provision that j+h is an integer of 2 to 4.

The terminating agent compound having a protected primary amino group and an alkoxysilyl group may be any of various compounds as are known in the art. In one embodiment, the compound having a protected primary amino group and an alkoxysilyl group may include, for example, N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

In one embodiment, the compound having a protected primary amino group and an alkoxysilyl group may be any compound of formula III

RN-(CH₂)_{X}Si(OR')₃, III

wherein R in combination with the nitrogen (N) atom is a protected amine group which upon appropriate post-treatment yields a primary amine, R' represents a group having 1 to 18 carbon atoms selected from an alkyl, a cycloalkyl, an allyl, or an aryl; and X is an integer from 1 to 20. In one embodiment, at least one R' group is an ethyl radical. By appropriate post-treatment to yield a primary amine, it is meant that subsequent to reaction of the living polymer with the compound having a protected primary amino group and an alkoxysilyl group, the protecting groups are removed. For example, in the case of bis(trialkylsilyl) protecting group as in N,N-bis(trimethylsilyl)aminopropyltriethoxysilane, hydrolysis is used to remove the trialkylsilyl groups and leave the primary amine.

In one embodiment, the rubber composition includes from 50 to 90 phr of the styrene-butadiene rubber functionalized with an alkoxysilane group and a primary amine group or thiol group.

Suitable styrene-butadiene rubbers functionalized with an alkoxysilane group and a primary amine group are available commercially, such as HPR 340 from Japan Synthetic Rubber (JSR).

In one embodiment, the solution polymerized styrene-butadiene rubber is as disclosed in WO-A-2007/047943 and is functionalized with an alkoxysilane group and a thiol, and comprises the reaction product of a living anionic polymer and a silane-sulfide modifier represented by the formula IV

(R⁴O)ₓR⁴_{y}Si-R⁵-S-SiR⁴₃ IV

wherein Si is silicon; S is sulfur; O is oxygen; x is an integer selected from 1, 2 and 3; y is an integer selected from 0, 1, and 2; x+y=3; R⁴ is the same or different and is (C₁-C₁₆) alkyl; and R' is aryl, and alkyl aryl, or (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

The solution polymerized styrene-butadiene rubber in the outer cap layer and inner cap layer has a glass transition temperature in a range from -65 °C to -55 °C. A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. The Tg is determined as a peak midpoint by a differential scanning calorimeter (DSC) at a temperature rate of increase of 10ºC per minute according to ASTM D7426-08 (2013)

The number average molecular weight is measured with gel permeation chromatography (GPC) using polystyrene calibration standards, according to ASTM 3536.

The softening point of a resin is determined by ASTM E28-14 which may sometimes be referred to as a ring and ball softening point.

A reference to a cis-1,4-polybutadiene is a 1,4-polybutadiene having at least 90 percent cis-content, preferably at least 95 percent cis-content.

A reference to a cis-1,4-polyisoprene is a 1,4-polyisoprene having at least 90 percent cis-content, preferably at least 92 percent cis-content or at least 95 percent cis-content.

Suitable styrene-butadiene rubbers functionalized with an alkoxysilane group and a thiol group are available commercially, such as Sprintan® SLR 3402 from Styron.

Another component of the rubber compositions of the outer cap layer and inner cap layer is from 50 to 10 phr of polybutadiene having a cis 1,4 content greater than 95 percent and a Tg ranging from -80 to -110 °C. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95ºC to -105ºC. Suitable polybutadiene rubbers are available commercially, such as Budene® 1229 from Goodyear and the like, having a Tg of -108 °C and cis 1,4, content of 96%.

The rubber compositions may also include a processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, and low PCA oils, such as MES, TDAE, and heavy naphthenic oils, and vegetable oils such as sunflower, soybean, and safflower.

The rubber compositions of the outer cap layer include a combination of processing oil and resin in an amount ranging from 30 to 80 phr. In one embodiment, the rubber composition includes a combination of processing oil and resin in an amount ranging from 30 to 50 phr. In one embodiment, the rubber composition includes a combination of processing oil and resin in an amount ranging from 50 to 80 phr.

In one embodiment, the weight ratio of resin to oil in one of the central zone composition and lateral zone composition is greater than 2, and the weight ratio of resin to oil in the other of the central zone composition and lateral zone composition is less than 2. In one embodiment, the weight ratio of resin to oil in one of the central zone composition and lateral zone composition is greater than 2 and less than 4, and the weight ratio of resin to oil in the other of the central zone composition and lateral zone composition is less than 2 and greater than 1. In one embodiment, the weight ratio of resin to oil in one of the central zone composition and lateral zone composition is greater than 2.2 and less than 4, and the weight ratio of resin to oil in the other of the central zone composition and lateral zone composition is less than 1.8 and greater than 1. In one embodiment, the weight ratio of resin to oil in one of the central zone composition and lateral zone composition is greater than 2.5 and less than 4, and the weight ratio of resin to oil in the other of the central zone composition and lateral zone composition is less than 1.5 and greater than 1.

In one embodiment, the weight ratio of resin to oil in the central zone composition is greater than 2, alternatively greater than 2 and less than 4, alternatively greater than 2.2 and less than 4, alternatively greater than 2.5 and less than 4, and the weight ratio of resin to oil in the lateral zone composition is less than 2, alternatively less than 2 and greater than 1, alternatively less than 1.8 and greater than 1, alternatively less than 1.5 and greater than 1.

In one embodiment, the weight ratio of resin to oil in the lateral zone composition is greater than 2, alternatively greater than 2 and less than 4, alternatively greater than 2.2 and less than 4, alternatively greater than 2.5 and less than 4, and the weight ratio of resin to oil in the central zone composition is less than 2, alternatively less than 2 and greater than 1, alternatively less than 1.8 and greater than 1, alternatively less than 1.5 and greater than 1.

The rubber composition of the inner cap layer includes from 25 to 50 phr of processing oil, but is free or essentially free of resin. By essentially free, it is meant that no resin is added to the rubber composition of the inner cap layer; however, understanding that some residual resin may be included in the mixing process via contamination of the mixing equipment, the inner cap layer rubber composition includes less than 1 phr of resin. In another embodiment, the inner cap layer rubber composition includes less than 0.5 phr of resin.

The resin used in the rubber compositions of the outer cap layer have a Tg greater than 30 °C.

The resin is selected from the group consisting of hydrocarbon resins, phenol/acetylene resins, terpene phenol resins, rosin derived resins and mixtures thereof.

Representative hydrocarbon resins include coumarone-indene-resins, petroleum resins, terpene polymers, alphamethyl styrene resins and mixtures thereof.

Coumarone-indene resins are commercially available in many forms with melting points ranging from 10 to 160°C (as measured by the ball-and-ring method). Preferably, the melting point ranges from 30 to 100°C. Various analysis indicate that such resins are largely polyindene; however, typically contain random polymeric units derived from methyl indene, coumarone, methyl coumarone, styrene and methyl styrene.

Petroleum resins are commercially available with softening points ranging from 10°C to 120°C. Preferably, the softening point ranges from 30 to 100°C. Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include dicyclopentadiene, cyclopentadiene, their dimers and diolefins such as isoprene and piperylene.

Terpene polymers are commercially produced from polymerizing a mixture of beta pinene in mineral spirits. The resin is usually supplied in a variety of melting points ranging from 10°C to 135°C.

Phenol/acetylene resins may be used. Phenol/acetylene resins may be derived by the addition of acetylene to butyl phenol in the presence of zinc naphthlate. Additional examples are derived from alkylphenol and acetylene.

Terpene-phenol resins may be used. Terpene-phenol resins may be derived by copolymerization of phenolic monomers with terpenes such as limonenes and pinenes.

Resins derived from rosin and derivatives may be used in the present invention. Gum and wood rosin have much the same composition, although the amount of the various isomers may vary. They typically contain 10 percent by weight neutral materials, 53 percent by weight resin acids containing two double bonds, 13 percent by weight of resin acids containing one double bond, 16 percent by weight of completely saturated resin acids and 2 percent of dehydroabietic acid which contains an aromatic ring but no unsaturation. There are also present 6 percent of oxidized acids. Representative of the diunsaturated acids include abietic acid, levopimaric acid and neoabietic acid. Representative of the monounsaturated acids include dextroplmaris acid and dihydroabietic acid. A representative saturated rosin acid is tetrahydroabietic acid.

In one embodiment, the resin is derived from styrene and alphamethylstyrene. It is considered that, in one aspect, its glass transition temperature (Tg) characteristic combined with its molecular weight (Mn) and molecular weight distribution (Mw/Mn) provides a suitable compatibility of the resin in the rubber composition, the degree of compatibility being directly related to the nature of the rubber composition.

The presence of the styrene/alphamethylstyrene resin with a rubber blend which contains the presence of the styrene-butadiene elastomer is considered herein to be beneficial because of observed viscoelastic properties of the tread rubber composition such as complex and storage modulus, loss modulus tan delta and loss compliance at different temperature/frequency/strain as hereinafter generally described.

The properties of complex and storage modulus, loss modulus, tan delta and loss compliance are understood to be generally well known to those having skill in such art. They are hereinafter generally described.

The molecular weight distribution of the resin is visualized as a ratio of the resin's molecular weight average (Mw) to molecular weight number average (Mn) values and is considered herein to be in a range of 1.5/1 to 2.5/1 which is considered to be a relatively narrow range. This believed to be advantageous because of the selective compatibility with the polymer matrix and because of a contemplated use of the tire in wet and dry conditions over a wide temperature range.

The measurement of Tg for resins is DSC according to ASTM D6604.

The styrene/alphamethylstyrene resin is considered herein to be a relatively short chain copolymer of styrene and alphamethylstyrene with a styrene/alphamethylstyrene molar ratio in a range of 0.40 to 1.50. In one aspect, such a resin can be suitably prepared, for example, by cationic copolymerization of styrene and alphamethylstyrene in a hydrocarbon solvent.

Thus, the contemplated styrene/alphamethylstyrene resin can be characterized, for example, by its chemical structure, namely, its styrene and alphamethylstyrene contents and softening point and also, if desired, by its glass transition temperature, molecular weight and molecular weight distribution.

In one embodiment, the styrene/alphamethylstyrene resin is composed of 40 to 70 percent units derived from styrene and, correspondingly, 60 to 30 percent units derived from alphamethylstyrene. In one embodiment, the styrene/alphamethylstyrene resin has a softening point according to ASTM No. E-28 in a range of 80ºC to 145ºC.

Suitable styrene/alphamethylstyrene resin is available commercially as Resin 2336 from Eastman or Sylvares SA85 from Arizona Chemical.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials, and such terms are well known to those having skill in the rubber mixing or rubber compounding art.

The vulcanizable rubber compositions of the outer cap layer may include from 100 to 180 phr of silica. The vulcanizable rubber composition of the inner cap layer may include from 70 to 120 phr of silica.

In the rubber compositions of the outer cap layer, including the central zone composition and the lateral zone composition, the weight ratio of the amount of silica to the total amount of resin and oil is less than 3. In one embodiment in the rubber compositions of the outer cap layer, the weight ratio of the amount of silica to the total amount of resin and oil is less than 3 and greater than 1. In one embodiment in the rubber compositions of the outer cap layer, the weight ratio of the amount of silica to the total amount of resin and oil is less than 2.5 and greater than 1. The weight ratio of the amount of silica to the total amount of resin and oil in the central zone composition and lateral zone composition may be the same or different, within the stated ranges.

In the rubber composition of the inner cap layer, the weight ratio of the amount of silica to the amount of oil is greater than 3. In one embodiment in the rubber composition of the inner cap layer, the weight ratio of the amount of silica to the amount of oil is greater than 3 and less than 6. In one embodiment in the rubber composition of the inner cap layer, the weight ratio of the amount of silica to the amount of oil is greater than 3.5 and less than 6.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

The vulcanizable rubber compositions may include from 5 to 50 phr of carbon black.

Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

It may be preferred to have the rubber composition for use in the outer cap layer and inner cap layer to additionally contain a conventional sulfur containing organosilicon compound. Examples of suitable sulfur containing organosilicon compounds are of the formula:

Z - Alk - Sn - Alk - Z V

in which Z is selected from the group consisting of 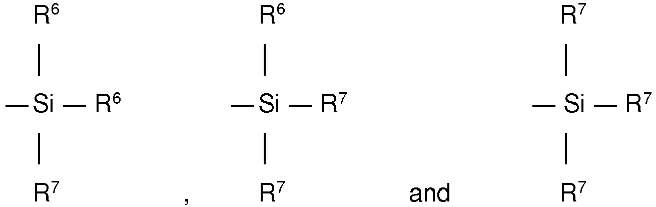 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula V, preferably Z is 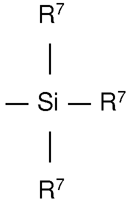 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in US-B-6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include compounds disclosed in US-A-2006/0041063. In one embodiment, the sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is NXT-Z™ from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound of formula V in a rubber composition will vary depending on the level of other additives that are used. Generally speaking, the amount of the compound of formula V will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1.5 to 6 phr being preferred. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread outer cap layer and tread inner cap layer), sidewall, apex, chafer, sidewall insert, wirecoat or innerliner. Preferably, the compound is a tread.

The pneumatic tire of the present invention may be a race tire, passenger tire, aircraft tire, agricultural, earthmover, off-the-road, or truck tire. Preferably, the tire is a passenger or truck tire. The tire may also be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

### Example 1

This example illustrates the advantage of a rubber composition according to the invention. Rubber compounds were mixed according to the formulations shown in Table 1, with amounts given in phr. Compounds also containing standard amounts of additives including curatives, coupling agents, and antidegradants.

The compounds were cured and tested for physical properties as shown in Table 2.

**Table 1**

| Composition Type | Inner Tread | Lateral | Central |
|---|---|---|---|
| SBR low Tg s-SBR¹ | 75 | 75 | 75 |
| BR high cis² | 25 | 25 | 25 |
| Silica 125 m²/g³ | 97 | 118 | 118 |
| Silane coupling agent⁴ | 6.1 | 7.4 | 7.4 |
| TDAE oil | 20 | 18 | 26 |
| Resin⁵ | 0 | 47 | 34 |
| Fatty acid⁶ | 5.0 | 5.0 | 5.0 |
| Waxes | 1.5 | 1.5 | 1.5 |
| Antioxidants⁷ | 3.0 | 3.0 | 3.0 |
| ZnO | 1.2 | 1.5 | 1.5 |
| Sulfur | 0.37 | 0.6 | 0.57 |
| Accelerators⁸ | 4.55 | 6.1 | 6.0 |

| | | | |
|---|---|---|---|
| ¹Solution polymerized SBR with styrene content of 15% and 1,2-vinyl content of 30%, Tg = -60 °C, as SLR3402 from Styron. ²High cis 1,4-polybutadiene rubber as Budene 1229™ from The Goodyear Tire & Rubber Company having a Tg of -106°C having a vinyl 1,2-content of less than 4 percent and a cis 1,4-content of more than 96 percent ³Precipitated silica as HiSiI315G-D™ from PPG having a BET (nitrogen) surface area of 125 m²/g ⁴Silica coupler comprising a bis(3-triethoxysilylpropyl) polysulfide containing an average in a range of from 2 to 2.6 connecting sulfur atoms in its polysulfidic bridge as Si266™ from Evonik ⁵Traction resin A as copolymer of styrene and alphamethylstyrene (styrene-alphamethylstyrene copolymer) having a softening point of 80°C to 90°C obtained as Sylvares SA85™ from Arizona Chemicals ⁶Fatty acids comprised of stearic, palmitic and oleic acids ⁷mixed p-phenylene diamine type ⁸Sulfenamide, dithiocarbamate and diphenylguanidine type | | | |

**Table 2**

| | Inner | Lateral | Central |
|---|---|---|---|
| Tensile properties¹ | | | |
| Tensile strength (MPa) | 17.5 | 17.0 | 17.2 |
| M300 (MPa) | 7.1 | 6.6 | 6.7 |
| Elongation (%) | 585 | 628 | 620 |
| Shore A hardness at 23°C | 62 | 53 | 54 |

| Dynamic properties² | | | |
|---|---|---|---|
| Winter indicator | | | |
| *the lower the better* | | | |
| E' at -20°C (MPa) | 20 | 33 | 28 |

| RR indicator | | | |
|---|---|---|---|
| *the lower the better* | | | |
| tan delta at 40°C | 0.17 | 0.20 | 0.20 |

| Wet indicator | | | |
|---|---|---|---|
| *the higher the better* | | | |
| tan delta at -10°C | 0.29 | 0.39 | 0.33 |

| | | | |
|---|---|---|---|
| ¹Data according to Automated Testing System instrument by the Instron Corporation. Such instrument may determine ultimate tensile, ultimate elongation, modulii, etc. Data reported in the Table is generated by running the ring tensile test station which is an Instron 4201 load frame. ²Dynamic properties were determined by means of a GABO Eplexor tester. The test specimen is subjected to 0.25% sinusoidal deformation at 1 Hz and the temperature is varied. | | | |

## Claims

1. A pneumatic tire having a tread (10, 110) comprising a tread base layer (14, 114) and a tread cap layer (12, 120) disposed radially outward of the base layer (14, 114);
the tread cap layer (12, 120) comprising an axially central zone (20, 120) and two lateral zones (18a, 18b, 118a, 118b), namely a first lateral zone (18a, 118a) and a second lateral zone (18b, 118b), each being disposed axially adjacent to the central zone (20, 120);
the central zone (20, 120) comprising a central zone rubber composition, the first lateral zone (18a, 118a) comprising a first lateral zone rubber composition and the second lateral zone (18b, 118b) comprising a second lateral zone rubber composition;
the central zone rubber composition, the first lateral zone rubber composition and the second lateral zone rubber composition each comprising, based on 100 parts by weight of elastomer (phr):
from 50 to 90 phr of a solution polymerized styrene-butadiene rubber having a glass transition temperature (Tg) in a range of from -65 °C to -55 °C and functionalized with an alkoxysilane group and at least one functional group selected from the group consisting of primary amines and thiols;
from 50 to 10 phr of a polybutadiene having a cis 1,4-content greater than 90 percent, preferably greater than 95 percent, and a Tg in a range of from -80 to -110 °C;
from 100 to 180 phr of silica; and
from 30 to 80 phr of a combination of a resin having a Tg of at least 30 °C and an oil, wherein the weight ratio of the amount of silica to the total amount of resin and oil is less than 3;
the weight ratio of resin to oil in at least one of the central zone rubber composition, the first lateral zone rubber composition and the second lateral zone rubber composition being greater than 2, and the weight ratio of resin to oil in at least one of the central zone rubber composition, the first lateral zone rubber composition and the second lateral zone rubber composition being less than 2.

2. The pneumatic tire of claim 1 wherein the first lateral zone rubber composition is different from the second lateral zone rubber composition.

3. The pneumatic tire of claim 2 wherein the central zone rubber composition is the same as the first lateral zone rubber composition or as the second lateral zone rubber composition.

4. The pneumatic tire of claim 1 wherein the first lateral zone rubber composition and the second lateral zone rubber composition are the same, and, accordingly, the central zone rubber composition is different from the first and the second lateral zone rubber composition.

5. The pneumatic tire of at least one of the previous claims wherein the tread cap layer (12, 120) is the radially outermost tread cap layer of the tread and configured to fully or at least partially come into contact with the road when the tire is used.

6. The pneumatic tire of at least one of the previous claims wherein the first and/or the second lateral zone rubber composition comprises from 30 to 80 phr of a combination of an oil and a terpene phenol resin having a Tg greater than 100 °C.

7. The pneumatic tire of at least one of the previous claims wherein the weight ratio of resin to oil in the central zone rubber composition is less than 1.8 and greater than 1; and/or wherein the weight ratio of resin to oil in the first and/or the second lateral rubber composition is greater than 2.2 and less than 4.

8. The pneumatic tire of at least one of the previous claims 1 to 6 wherein the weight ratio of resin to oil in the central zone rubber composition is greater than 2.2 and less than 4; and/or wherein the weight ratio of resin to oil in the first and/or the second lateral rubber composition is less than 1.8 and greater than 1.

9. The pneumatic tire of at least one of the previous claims wherein the central zone rubber composition comprises from 30 to 80 phr of a combination of an oil and a terpene phenol resin having a Tg greater than 100 °C.

10. The pneumatic tire of at least one of the previous claims wherein said tread cap layer (12, 120) is the radially outermost tread cap layer or the tread (10, 110) or a radially outer tread cap layer of the tread (12, 120) and wherein the tread (10, 110) further comprises a radially inner tread cap layer (124) disposed radially inward of the outer tread cap layer (120) and radially outward of the base tread layer (14, 114), the inner tread cap layer (124) at least partially underlying the outer tread cap layer (120).

11. The pneumatic tire of claim 10 wherein the radially inner tread cap layer (124) comprises a rubber composition comprising, based on 100 parts by weight of elastomer (phr):
from 50 to 90 phr of a solution polymerized styrene-butadiene rubber functionalized with an alkoxysilane group and at least one functional group selected from the group consisting of primary amines and thiols;
from 50 to 10 phr of polybutadiene having a cis 1,4 content greater than 90 percent, preferably greater than 95 percent, and a Tg in a range of from -80 to -110 °C;
from 70 to 120 phr of a rubber reinforcing filler comprising at least one silica, preferably silica, together with a silica coupling agent for the silica having a moiety reactive with hydroxyl groups on the silica and another different moiety interactive with said diene-based elastomers; and
from 10 to 40 phr of an oil.

12. The pneumatic tire of claim 11 wherein the rubber composition of the radially inner tread cap layer (124) is free or at least essentially free of a resin and/or wherein the weight ratio of the rubber reinforcing filler to oil is greater than 3.

## Patentansprüche

1. Luftreifen mit einer Lauffläche (10, 110), umfassend eine Laufflächenbasisschicht (14, 114) und einen Laufflächenkronenschicht (12, 120), die radial äußerlich von der Basisschicht (14, 114) angeordnet sind;
wobei die Laufflächenkronenschicht (12, 120) einen axial mittleren Bereich (20, 120) und zwei seitliche Bereiche (18a, 18b, 118a, 118b) umfasst, nämlich einen ersten seitlichen Bereich (18a, 118a) und einen zweiten seitlichen Bereich (18b, 118b), die jeweils axial angrenzend an den mittleren Bereich (20, 120) angeordnet sind;
wobei der mittlere Bereich (20, 120) eine Kautschukzusammensetzung für den mittleren Bereich umfasst, der erste seitliche Bereich (18a, 118a) eine Kautschukzusammensetzung für den ersten seitlichen Bereich umfasst und der zweite seitliche Bereich (18b, 118b) eine Kautschukzusammensetzung für den zweiten seitlichen Bereich umfasst;
wobei die Kautschukzusammensetzung für den mittleren Bereich, die Kautschukzusammensetzung für den ersten seitlichen Bereich und die Kautschukzusammensetzung für den zweiten seitlichen Bereich jeweils basierend auf 100 Gewichtsteilen Elastomer (phr) Folgendes umfassen:
von 50 bis 90 phr eines lösungspolymerisierten Styrol-Butadien-Kautschuks mit einer Glasübergangstemperatur (Tg) in einem Bereich von -65 °C bis -55 °C und funktionalisiert mit einer Alkoxysilangruppe und wenigstens einer funktionellen Gruppe, die aus der Gruppe bestehend aus primären Aminen und Thiolen ausgewählt ist;
von 50 bis 10 phr eines Polybutadiens mit einem cis-1,4-Gehalt von über 90 %, bevorzugt mehr als 95 % und einer Tg in einem Bereich von -80 bis -110 °C;
von 100 bis 180 phr Siliciumdioxid; und
von 30 bis 80 phr einer Kombination eines Harzes mit einer Tg von wenigstens 30 °C und eines Öls, wobei das Gewichtsverhältnis der Menge an Siliciumdioxid zu der Gesamtmenge an Harz und Öl weniger als 3 beträgt;
wobei das Gewichtsverhältnis von Harz zu Öl in der Kautschukzusammensetzung für den mittleren Bereich, der Kautschukzusammensetzung für den ersten seitlichen Bereich und/oder der Kautschukzusammensetzung für den zweiten seitlichen Bereich über 2 beträgt und das Gewichtsverhältnis von Harz zu Öl in der Kautschukzusammensetzung für den mittleren Bereich, der Kautschukzusammensetzung für den ersten seitlichen Bereich und/oder der Kautschukzusammensetzung für den zweiten seitlichen Bereich weniger als 2 beträgt.

2. Luftreifen nach Anspruch 1, wobei sich die Kautschukzusammensetzung für den ersten seitlichen Bereich von der Kautschukzusammensetzung für den zweiten seitlichen Bereich unterscheidet.

3. Luftreifen nach Anspruch 2, wobei die Kautschukzusammensetzung für den mittleren Bereich dieselbe ist, wie die Kautschukzusammensetzung für den ersten seitlichen Bereich oder wie die Kautschukzusammensetzung für den zweiten seitlichen Bereich.

4. Luftreifen nach Anspruch 1, wobei die Kautschukzusammensetzung für den ersten seitlichen Bereich und die Kautschukzusammensetzung für den zweiten seitlichen Bereich dieselbe sind und entsprechend sich die Kautschukzusammensetzung für den mittleren Bereich und die Kautschukzusammensetzung für den ersten und den zweiten seitlichen Bereich unterscheiden.

5. Luftreifen nach wenigstens einem der vorhergehenden Ansprüche, wobei die Laufflächenkronenschicht (12, 120) die radial äußerste Laufflächenkronenschicht der Lauffläche ist und konfiguriert ist, um vollständig oder wenigstens teilweise in Berührung mit der Straße zu kommen, wenn der Reifen verwendet wird.

6. Luftreifen nach wenigstens einem der vorhergehenden Ansprüche, wobei die Kautschukzusammensetzung für den ersten und/oder den zweiten seitlichen Bereich 30 bis 80 phr einer Kombination eines Öls und eines Terpenphenolharzes mit einer Tg über 100 °C umfasst.

7. Luftreifen nach wenigstens einem der vorhergehenden Ansprüche, wobei das Gewichtsverhältnis von Harz zu Öl in der Kautschukzusammensetzung für den mittleren Bereich weniger als 1,8 und über 1 beträgt; und/oder
wobei das Gewichtsverhältnis von Harz zu Öl in der Kautschukzusammensetzung für den ersten und/oder den zweiten seitlichen Bereich über 2,2 und kleiner als 4 beträgt.

8. Luftreifen nach wenigstens einem der vorhergehenden Ansprüche 1 bis 6, wobei das Gewichtsverhältnis von Harz zu Öl in der Kautschukzusammensetzung für den mittleren Bereich über 2,2 und weniger als 4 beträgt; und/oder
wobei das Gewichtsverhältnis von Harz zu Öl in der Kautschukzusammensetzung für den ersten und/oder den zweiten seitlichen Bereich weniger als 1,8 und über 1 beträgt.

9. Luftreifen nach wenigstens einem der vorhergehenden Ansprüche, wobei die Kautschukzusammensetzung für den mittleren Bereich 30 bis 80 phr einer Kombination eines Öls und eines Terpenphenolharzes mit einer Tg über 100 °C umfasst.

10. Luftreifen nach wenigstens einem der vorhergehenden Ansprüche, wobei die Laufflächenkronenschicht (12, 120) die radial äußerste Laufflächenkronenschicht oder die Lauffläche (10, 110) oder eine radial äußere Laufflächenkronenschicht der Lauffläche (12, 120) ist und wobei die Lauffläche (10, 110) ferner eine radial innere Laufflächenkronenschicht (124) umfasst, die radial innerlich der äußeren Laufflächenkronenschicht (120) und radial äußerlich der Basislaufflächenschicht (14, 114) angeordnet ist, wobei die innere Laufflächenkronenschicht (124) wenigstens teilweise unter der äußeren Laufflächenkronenschicht (120) liegt.

11. Luftreifen nach Anspruch 10, wobei die radial innere Laufflächenkronenschicht (124) eine Kautschukzusammensetzung umfasst, die basierend auf 100 Gewichtsteilen Elastomer (phr) Folgendes umfasst:
von 50 bis 90 phr eines lösungspolymerisierten Styrol-Butadien-Kautschuks, der mit einer Alkoxysilangruppe und wenigstens einer funktionellen Gruppe funktionalisiert ist, die aus der Gruppe bestehend aus primären Aminen und Thiolen ausgewählt ist;
von 50 bis 10 phr eines Polybutadiens mit einem cis-1,4-Gehalt von über 90 %, bevorzugt über 95 % und einer Tg in einem Bereich von -80 bis -110 °C;
von 70 bis 120 phr eines kautschukverstärkenden Füllstoffs, umfassend wenigstens ein Siliciumdioxid, bevorzugt Siliciumdioxid zusammen mit einem Siliciumdioxid-Haftvermittler für die Siliciumdioxid mit einem mit Hydroxylgruppen an dem Siliciumdioxid reaktiven Molekülteil und einem anderen anderen mit den Elastomeren auf Dienbasis wechselwirkenden Molekülteil; und
10 bis 40 phr eines Öls.

12. Luftreifen nach Anspruch 11, wobei die Kautschukzusammensetzung der radial inneren Laufflächenkronenschicht (124) im Wesentlichen frei oder wenigstens teilweise frei von einem Harz ist und/oder wobei das Gewichtsverhältnis des kautschukverstärkenden Füllstoffs zu Öl über 3 beträgt.

## Revendications

1. Bandage pneumatique possédant une bande de roulement (10, 110) qui comprend une couche de base de bande de roulement (14, 114) et une couche de sommet de bande de roulement (12, 120) disposée en direction radiale à l'extérieur de la couche de base (14, 114) ;
la couche de sommet (12, 120) de la bande de roulement comprenant une zone centrale en direction axiale (20, 120) et deux zones latérales (18a, 18b, 118a, 118b), plus précisément une première zone latérale (18a, 118a) et une deuxième zone latérale (18b, 118b), qui sont chacune disposée en direction axiale en position adjacente à la zone centrale (20, 120) ;
la zone centrale (20, 120) comprenant une composition de caoutchouc de la zone centrale, la première zone latérale (18a, 118a) comprenant une composition de caoutchouc de la première zone latérale et la deuxième zone latérale (18b, 118b) comprenant une composition de caoutchouc de la deuxième zone latérale (18b, 118b) ;
la composition de caoutchouc de la zone centrale, la composition de caoutchouc de la première zone latérale et la composition de caoutchouc de la deuxième zone latérale comprenant chacune, en se basant sur 100 parties en poids d'élastomère (phr) :
de 50 à 90 phr d'un caoutchouc de styrène-butadiène polymérisé en solution qui possède une température de transition vitreuse (Tg) qui se situe dans une plage de -65 °C à -55 °C et qui est fonctionnalisé avec un groupe alcoxysilane et avec au moins un groupe fonctionnel choisi parmi le groupe constitué par des amines primaires et par des thiols ;
de 50 à 10 phr d'un polybutadiène dont la teneur en microstructure 1,4-cis est supérieure à 90 %, de préférence supérieure à 95 %, et dont la valeur Tg se situe dans une plage de -80 à -110 °C ;
de 100 à 180 phr d'une silice ; et
de 30 à 80 phr d'une combinaison d'une résine dont la valeur Tg s'élève à au moins 30 °C et d'une huile ; dans lequel le rapport pondéral de la quantité de la silice à la quantité totale de la résine et de l'huile est inférieur à 3 ;
le rapport pondéral de la résine à l'huile dans au moins une composition de caoutchouc choisie parmi la composition de caoutchouc de la zone centrale, la composition de caoutchouc de la première zone latérale et la composition de caoutchouc de la deuxième zone latérale étant supérieur à 2, et le rapport pondéral de la résine à l'huile dans au moins une composition de caoutchouc choisie parmi la composition de caoutchouc de la zone centrale, la composition de caoutchouc de la première zone latérale et la composition de caoutchouc de la deuxième zone latérale étant inférieur à 2.

2. Bandage pneumatique selon la revendication 1, dans lequel la composition de caoutchouc de la première zone latérale est différente de la composition de caoutchouc de la deuxième zone latérale.

3. Bandage pneumatique selon la revendication 2, dans lequel la composition de caoutchouc de la zone centrale est identique à la composition de caoutchouc de la première zone latérale ou à la composition de caoutchouc de la deuxième zone latérale.

4. Bandage pneumatique selon la revendication 1, dans lequel la composition de caoutchouc de la première zone latérale et la composition de caoutchouc de la deuxième zone latérale sont identiques et par conséquent la composition de caoutchouc de la zone centrale est différente de la composition de caoutchouc de la première et de la deuxième zone latérale.

5. Bandage pneumatique selon au moins une des revendications précédentes, dans lequel la couche de sommet (12, 120) de la bande de roulement représente, dans la bande de roulement, la couche de sommet de la bande de roulement qui est la plus externe en direction radiale et qui est configurée pour entrer en contact de manière complète ou au moins de manière partielle avec la route lorsque le bandage pneumatique est utilisé.

6. Bandage pneumatique selon au moins une des revendications précédentes, dans lequel la composition de caoutchouc de la première et/ou de la deuxième zone latérale comprend de 30 à 80 phr d'une combinaison d'une huile et d'une résine terpène phénolique dont la valeur Tg est supérieure à 100 °C.

7. Bandage pneumatique selon au moins une des revendications précédentes, dans lequel le rapport pondéral de la résine à l'huile dans la composition de caoutchouc de la zone centrale est inférieur à 1,8 et est supérieur à 1 ; et/ou dans lequel le rapport pondéral de la résine à l'huile dans la composition de caoutchouc de la première et/ou de la deuxième zone latérale est supérieur à 2,2 et est inférieur à 4.

8. Bandage pneumatique selon au moins une des revendications 1 à 6, dans lequel le rapport pondéral de la résine à l'huile dans la composition de caoutchouc de la zone centrale est supérieur à 2,2 et est inférieur à 4 ; et/ou dans lequel le rapport pondéral de la résine à l'huile dans la composition de caoutchouc de la première et/ou de la deuxième zone latérale est inférieur à 1,8 et est supérieur à 1.

9. Bandage pneumatique selon au moins une des revendications précédentes, dans lequel la composition de caoutchouc de la zone centrale contient de 30 à 80 phr d'une combinaison d'une huile et d'une résine terpène phénolique dont la valeur Tg est supérieure à 100 °C.

10. Bandage pneumatique selon au moins une des revendications précédentes, dans lequel ladite couche de sommet (12, 120) de la bande de roulement représente, dans la bande de roulement (10, 110), la couche de sommet (12, 120) de la bande de roulement qui est la plus externe en direction radiale ou, dans la bande de roulement, une couche de sommet (12, 120) de la bande de roulement externe en direction radiale ; et dans lequel la bande de roulement (10, 110) comprend en outre une couche de sommet de la bande de roulement interne en direction radiale (124) disposée à l'intérieur en direction radiale, par rapport à la couche de sommet externe (120) de la bande de roulement et à l'extérieur en direction radiale de la couche de base (14, 114) de la bande de roulement, la couche de sommet interne (124) de la bande de roulement étant au moins en partie disposée en position sous-jacente par rapport à la couche de sommet externe (120) de la bande de roulement.

11. Bandage pneumatique selon la revendication 10, dans lequel la couche de sommet (124) de la bande de roulement interne en direction radiale comprend une composition de caoutchouc qui comprend, en se basant sur 100 parties en poids d'élastomère (phr) :
de 50 à 90 phr d'un caoutchouc de styrène-butadiène polymérisé en solution qui est fonctionnalisé avec un groupe alcoxysilane et avec au moins un groupe fonctionnel choisi parmi le groupe constitué par des amines primaires et par des thiols ;
de 50 à 10 phr d'un polybutadiène dont la teneur en microstructure 1,4-cis est supérieure à 90 %, de préférence supérieure à 95 %, et dont la valeur Tg se situe dans une plage de -80 à -110 °C ;
de 70 à 120 phr d'une matière de charge pour le renforcement du caoutchouc, qui comprend au moins une silice, de préférence de la silice, de manière conjointe avec un agent de couplage pour la silice qui possède une fraction apte à réagir avec des groupes hydroxyle sur la silice et une autre fraction différente apte à entrer en interaction avec lesdits élastomères à base diénique ; et
de 10 à 40 phr d'une huile.

12. Bandage pneumatique selon la revendication 11, dans lequel la composition de caoutchouc de la couche de sommet (124) de la bande de roulement interne en direction radiale est exempte ou est exempte au moins à titre essentiel d'une résine et/ou dans lequel le rapport pondéral de la matière de charge pour le renforcement du caoutchouc à l'huile est supérieur à 3.
